# DEMANDE DE BREVET EUROPEEN

(11) **EP 1 698 958 A1**
(43) Date de publication de la demande: **06.09.2006**
(21) Numéro de dépôt: 05290446.3
(22) Date de dépôt: 25.02.2005
(51) Int. Cl.: G06F 1/00

(54) **Procédé de sécurisation de l'ecriture en mémoire contre des attaques par rayonnement ou autres**

(71) Demandeur: Axalto SA, 92120 Montrouge (FR)
(72) Inventeur: Giraud, Nicolas, c/o Axalto SA, 78431 Louveciennes Cedex (FR); Gombocz, Pascal, c/o Axalto SA, 78431 Louveciennes Cedex (FR)
(74) Mandataire: Cour, Pierre

(57) **Abrégé**

Le procédé selon la présente invention concerne un procédé de sécurisation d'un ensemble électronique comportant des moyens de traitement et des moyens de mémorisation (7,11) contenant un programme à exécuter. Le procédé consiste à associer à au moins une donnée stockée dans lesdits moyens (7,11) au moins un attribut d'identification permettant de classer ladite donnée dans une famille de données.

La présente invention concerne également le module électronique dans lequel ledit procédé est implémenté et la carte comprenant ledit module.

## Description

La présente invention concerne un procédé et un dispositif de sécurisation d'un ensemble électronique mettant en oeuvre un programme à protéger. Plus précisément, le procédé vise à proposer une parade aux attaques par rayonnement, flash, lumière, laser, glitch, ou autres ou plus généralement à toute attaque perturbant l'exécution des instructions du programme. De telles attaques ont pour conséquence de modifier des instructions à exécuter, des données utilisées et/ou les adresses desdites données, et pour résultat l'inexécution ou la mauvaise exécution de certaines parties du programme ou encore l'obtention de résultats erronés.

### DOMAINE TECHNIQUE

Lors de l'exécution d'un programme par un microprocesseur, les attaques par exemple par injection de faute au moyen notamment de laser, glitch ou rayonnement électromagnétique ont pour conséquence de modifier les codes d'instructions exécutés par le processeur ou les adresses des données à traiter. Les instructions du programme peuvent être remplacées par des instructions produisant un effet différent : par exemple, les attaques peuvent transformer un codop d'instruction quelconque en un code d'instruction inopérant (codop 00h, BRSET0, NOP ou AVR suivant le microprocesseur). De ce fait, il en résulte une inexécution ou une exécution irrégulière de certaines parties du code : un attaquant peut rendre inopérant un traitement sécuritaire dans un système d'exploitation pour carte à puce. Les attaques peuvent perturber le fonctionnement du processeur et provoquer des sauts intempestifs dans la mémoire programme.

Ce type d'attaque permet également de supprimer des traitements intermédiaires sur des données utilisées dans des traitements ultérieurs ou de modifier des pointeurs du programme sur des données à traiter. Dans les deux cas, l'effet résultant est que des opérations sensibles sont exécutées avec des données autres que celles prévues par les concepteurs du programme. Le fait qu'une routine s'exécute avec des paramètres autres que ceux prévus peut avoir des conséquences graves en terme de sécurité. Par ce type d'attaque, un fraudeur peut s'ouvrir l'accès à des zones de données sensibles, neutraliser des opérations cryptographiques, et par exemple modifier le chargement des clés.

Un but de la présente invention est de proposer une parade efficace pour éviter l'exécution d'un programme avec des données autres que celles prévues.

### RESUME DE L'INVENTION

La présente invention concerne un procédé de sécurisation d'un ensemble électronique comportant des moyens de traitement et des moyens de mémorisation contenant un programme à exécuter, caractérisé en ce qu'il consiste à associer à au moins une donnée stockée dans lesdits moyens de mémorisation au moins un attribut d'identification permettant de classer ladite donnée dans une famille de données.

De cette manière, lorsque le programme est exécuté, il est vérifié que l'attribut de la donnée utilisée par le programme correspond à la donnée prévue. Dans le cas contraire, une attaque est détectée.

La présente invention concerne également un module électronique dans lequel ledit procédé est implémenté, une carte comprenant ledit module, un programme permettant d'implémenter ledit procédé.

### DESCRIPTION SOMMAIRE DES DESSINS

D'autres buts, avantages et caractéristiques de l'invention apparaîtront à la lecture de la description qui va suivre de la mise en oeuvre du procédé selon l'invention et d'un mode de réalisation d'un ensemble électronique adapté pour cette mise en oeuvre, donnés à titre d'exemple non limitatif en référence aux dessins ci-annexés dans lesquels :
- la figure 1 représente de manière schématique un exemple de dispositif dans lequel le procédé selon la présente invention est implémenté ;
- les figures 2a et 2b sont une représentation schématique d'une partie de la mémoire du dispositif selon la présente invention respectivement en l'absence et en présence d'une attaque ;
- les figures 3a, 3b, 3c, 3d représentent différentes étapes d'un processus cryptographique et les modifications en mémoire effectuées à chacune de ces étapes conformément au procédé selon la présente invention.

### MANIERE DE REALISER L'INVENTION

Le procédé selon l'invention vise à sécuriser un ensemble électronique, et par exemple un objet portable tel qu'une carte à puce mettant en oeuvre un programme. L'ensemble électronique comprend au moins des moyens de traitement tels qu'un processeur et des moyens de mémorisation tels qu'une mémoire. Le programme à sécuriser est installé dans la mémoire, par exemple de type ROM (Read Only Memory) dudit ensemble.

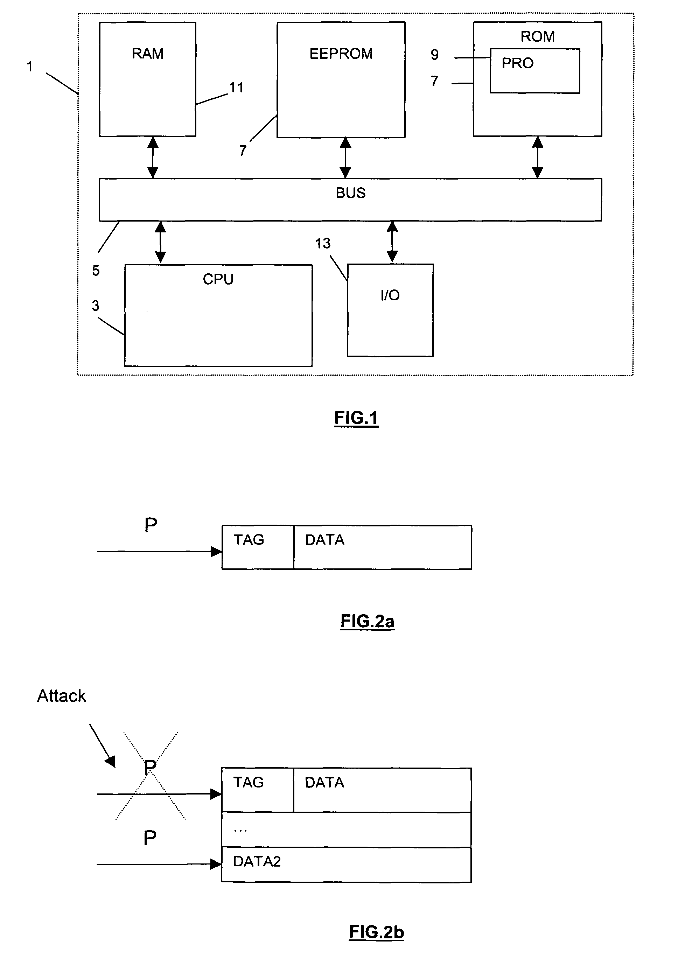

A titre d'exemple non limitatif, l'ensemble électronique décrit dans ce qui suit correspond à un système embarqué comprenant un module électronique 1 illustré sur la figure 1. De tels modules sont réalisés le plus souvent sous la forme d'un microcircuit électronique intégré monolithique, ou puce, qui une fois protégé physiquement par tout moyen connu peut être monté sur un objet portatif tel que par exemple une carte à puce, carte à microcircuit ou circuit intégré (carte à microprocesseur ...) ou autre utilisable dans divers domaines.

Le module électronique 1 comprend un microprocesseur CPU 3 relié de façon bidirectionnelle par un bus 5 interne à une mémoire 7 non volatile de type ROM, EEPROM (Electrical Erasable Programmable Read Only Memory), Flash, FeRam ou autre contenant un programme PRO 9 à exécuter, une mémoire 11 vive de type RAM, des moyens 13 I/O d'entrée/sortie pour communiquer avec l'extérieur. Dans l'exemple illustré par la suite, le programme 9 comprend notamment des routines de chargement de valeurs de données dans des buffers en mémoire RAM 11, un ou plusieurs processus de calcul tel qu'une fonction de calcul cryptographique (par exemple une fonction DES).

Le procédé selon l'invention consiste à s'assurer que le programme 9 utilise les données prévues lors de son exécution.

La présente invention consiste à identifier des données sensibles du programme par un attribut permettant de classer les données par catégorie, type, nature, par phase d'utilisation ou autre afin de les faire appartenir à une même famille et à vérifier cet attribut d'identification lors de l'utilisation. Selon la forme de réalisation décrite en détail dans la description qui suit, l'attribut est lié à la fonction qui utilise les données et/ou à la phase d'utilisation desdites données dans le programme. L'attribut identifie la donnée par rapport à son utilisation. Les données sont rassemblées en catégories, classes telles que par exemple les données d'entrée, de sortie ... (classes correspondant à des phases d'utilisation), et/ou les clés, donnée de brouillage ... (classes correspondant à une fonction de la donnée). L'attribut peut également faire dépendre une donnée de plusieurs classes. Par exemple, l'attribut associé à une clé peut correspondre à l'identifiant de cette clé (clé MAC ou autre) : la donnée appartient donc à la classe des clés MAC. L'identifiant de clé tient sur un octet : il est donc possible de caractériser sur un octet de plus la clé. Dans ce cas, l'attribut appartient à deux classes distinctes. L'attribut pourrait être lié à toutes autres caractéristiques portées par les données telles que par exemple son propriétaire, ...

Comme le montre la figure 2a, l'attribut d'identification (TAG) est associé à la donnée en mémoire (DATA) de sorte qu'un pointeur (P) sur cette donnée pointe sur l'ensemble constitué par la donnée et son attribut. Si le pointeur est modifié (figure 2b), la donnée pointée (DATA2) sera identifiée par un autre attribut ou pas d'attribut du tout et l'incohérence entre la donnée attendue et la donnée pointée pour le traitement sera détectée, donnant lieu à une parade sécuritaire.

Les algorithmes cryptographiques peuvent être la cible d'attaques par injection de faute visant à modifier les données traitées.

Une perturbation sur le pointeur du message d'entrée d'une fonction de calcul cryptographique peut permettre d'effectuer le calcul avec un faux message correspondant à des données présentes dans une autre zone de la mémoire de travail, pouvant être une zone à 0. Par ce moyen, l'attaquant peut obtenir un cryptogramme avec un message choisi ou tout du moins connu.

Une perturbation sur les opérations de chargement de la clé ou sur le pointeur de la clé d'une fonction de calcul cryptographique peut permettre d'effectuer le calcul avec une fausse clé correspondant à une clé utilisée dans des traitements précédents ou à des données présentes dans une autre zone de la mémoire de travail. Par ce moyen, l'attaquant peut annuler des opérations cryptographiques ou obtenir un cryptogramme avec une clé choisie ou tout du moins connue.

Une perturbation sur le pointeur du message de sortie d'une fonction de calcul cryptographique peut permettre d'éviter le stockage du résultat de l'opération cryptographique à l'emplacement où les opérations ultérieures l'attendent. Par ce moyen, l'attaquant peut dans certains cas obtenir la suppression de l'opération cryptographique du point de vue fonctionnel.

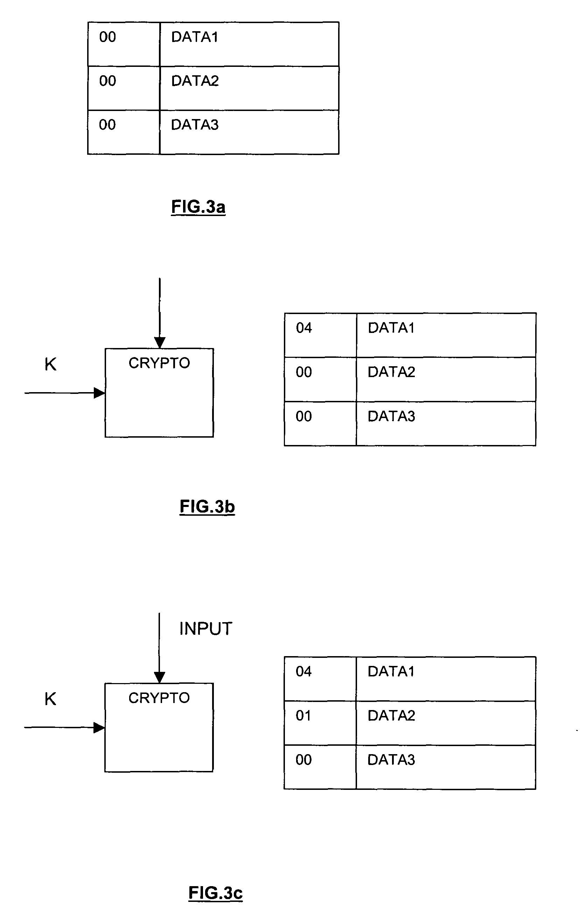

Dans la forme de réalisation particulière décrite ci-dessous et illustrée sur les figures 3a à 3d, l'invention s'applique en caractérisant les emplacements mémoire correspondant à la clé et aux messages d'entrée et de sortie avec un attribut correspondant à la fonction de calcul cryptographique et prenant en compte l'utilisation du paramètre dans la fonction.

L'attribut est par exemple un octet « tag » préfixant la zone de mémoire dans lequel la donnée est stockée. Le pointeur sur la donnée pointe sur la zone mémoire contenant le « tag » et la donnée.

On définit les valeurs suivantes des attributs associés aux données du calcul cryptographique :
00 : données non valides
01 : message d'entrée du calcul
03 : message de sortie du calcul
04 : clé du calcul cryptographique

Avant l'initialisation des paramètres de la fonction de calcul cryptographique, les emplacements mémoire en RAM 11 sont caractérisés par l'attribut 00 indiquant qu'aucune donnée valide n'est disponible. Sur la figure 3a, sont représentées les données en mémoire suivantes :

DATA 1 est la clé K utilisée dans l'algorithme cryptographique CRYPTO. DATA 2 est le message d'entrée INPUT dudit algorithme CRYPTO. DATA 3 contiendra le résultat RES obtenu par l'algorithme.

Comme le montre la figure 3b, lorsque le chargement de la valeur DATA1 de la clé K a été effectué dans l'emplacement prévu, à savoir dans le cas présent lors du chargement dans la mémoire tampon (buffer en mémoire RAM 11) d'entrée d'un algorithme de cryptographie tel que par exemple l'algorithme DES, l'attribut est initialisé avec la valeur 04 indiquant que la zone mémoire (buffer en RAM 11) contient effectivement une clé. La routine de chargement de la clé dans le buffer d'entrée de l'algorithme de cryptographie comprend donc l'initialisation à la valeur prévue par ladite routine de chargement, de l'attribut associé à la clé.

Il est nécessaire d'ajouter une ou plusieurs instructions à la routine logicielle de chargement (en mémoire RAM ou autre) de type connu afin de permettre d'attribuer une valeur à l'attribut de la donnée concernée (ici la clé).

De la même façon, le chargement de la valeur DATA2 du message d'entrée INPUT (figure 3c) est suivi de l'initialisation de l'attribut associé à la valeur 01. L'attribut associé au message de sortie du calcul est laissé à la valeur 00 indiquant qu'il n'y a aucun résultat valide disponible.

Lors de l'exécution de la fonction de calcul cryptographique et plus particulièrement dans l'exemple décrit lors de l'exécution de la routine logicielle du DES, les attributs du message d'entrée et de la clé sont vérifiés. Il est prévu dans la dite routine de vérifier la valeur des attributs.

Il est nécessaire d'ajouter une ou plusieurs instructions à la routine logicielle du processus de calcul (ici le DES) ou de tout autre processus de type connu afin de permettre de vérifier la valeur des attributs chargés dans le buffer en comparaison avec des valeurs prévues dans ladite routine ou stockées en mémoire (7).

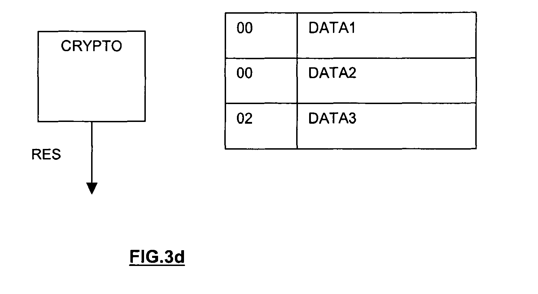

Si les attributs chargés dans le buffer ne correspondent pas aux valeurs prévues dans la routine (04 ou 01), une perturbation dans l'exécution du programme est détectée et une parade sécuritaire est déclenchée. Une fois le calcul effectué (figure 3d), les attributs de la clé et du message d'entrée sont initialisés à 00, puis l'attribut du message de sortie est initialisé à 02 indiquant que le résultat du calcul cryptographique est disponible. Cet attribut permettra à la fonction d'exploitation du résultat du calcul de vérifier que l'emplacement mémoire contient effectivement le résultat d'un calcul cryptographique.

L'utilisation de ce mécanisme rend possible la détection des attaques déjà évoquées. Une attaque visant à supprimer l'opération de chargement de la clé sera détectée car l'attribut de l'emplacement mémoire devant contenir la clé aura une valeur différente de 04. Une attaque visant à modifier le pointeur de clé sera détectée car la zone mémoire pointée par le pointeur modifié aura un attribut correspondant à la valeur présente à cet emplacement mémoire au lieu de 04. De même pour une attaque visant à modifier le pointeur du message d'entrée, la modification du pointeur du message de sortie entraînera l'initialisation de l'attribut à une valeur différente de 01 dans une zone différente de celle réservée pour cette donnée. L'attribut de l'emplacement mémoire contenant le véritable message de sortie conservera la valeur 00, ce qui permettra de détecter l'attaque lors de l'exploitation de ce résultat.

Ce mécanisme peut être étendu de manière systématique à l'ensemble du logiciel en associant à chaque donnée un attribut correspondant à la fonction dans laquelle elle est soit un paramètre d'entrée soit un paramètre de sortie et identifiant le numéro d'ordre dans la liste des paramètres. Les attributs des paramètres d'entrée sont initialisés lors de l'initialisation des paramètres (chargement en mémoire RAM ou dans un buffer d'un processus de calcul) avant l'appel à la fonction (ou processus de calcul) et vérifiés en préambule de la fonction (la fonction cryptographique DES dans l'exemple illustré précédemment). Les attributs des paramètres de sortie sont initialisés avant le retour de la fonction et vérifiés au retour de la fonction. Ce mécanisme peut ainsi être implémenté dans un compilateur.

La mise en place de ce mécanisme nécessite l'ajout du code d'initialisation de l'attribut du paramètre à protéger et l'ajout du code de vérification de l'attribut. Un octet supplémentaire est nécessaire en mémoire RAM pour chaque donnée à protéger.

Selon une autre forme de réalisation, la vérification de la valeur de l'attribut est effectuée par un module matériel cryptographique, par exemple le module matériel DES. Dans ce cas, il n'est plus nécessaire d'ajouter du code : le module matériel (DES par exemple) réalise la vérification de la valeur de l'attribut.

Selon un développement de la présente invention, l'attribut est stocké en mémoire (par exemple en mémoire EEPROM 7) de manière permanente. L'attribut est défini et associé à une donnée de manière définitive par exemple lors de la personnalisation. L'attribut est prédéterminé et ne peut être modifié. A titre illustratif, une clé est stockée en EEPROM ensemble avec l'attribut identifiant une clé 04. Lorsque la clé est chargée en RAM, la clé est accompagnée de son attribut. En RAM, la valeur de l'attribut peut être effacée ; dans ce cas, la donnée ne peut plus être utilisée et il est nécessaire de retrouver la valeur de celui-ci en EEPROM pour lancer un processus de calcul.

## Revendications

1. Procédé de sécurisation d'un ensemble électronique comportant des moyens de traitement et des moyens de mémorisation (7,11) contenant un programme à exécuter, **caractérisé en ce qu'**il consiste à associer à au moins une donnée stockée dans lesdits moyens de mémorisation (7,11) au moins un attribut d'identification permettant de classer ladite donnée dans une famille de données.

2. Procédé selon la revendication 1, **caractérisé en ce que** consiste à associer à au moins une donnée stockée dans lesdits moyens de mémorisation au moins un attribut d'identification permettant de classer ladite donnée dans une famille de données de manière à détecter une attaque lorsque l'attribut ne correspond pas à la famille attendue lors de l'utilisation de ladite donnée dans le programme.

3. Procédé selon l'une des revendications 1 ou 2, **caractérisé en ce que** l'attribut identifie la donnée par rapport à son utilisation dans le programme.

4. Procédé selon la revendication 3, **caractérisé en ce que** l'attribut est lié à la fonction de ladite donnée dans le programme ou une partie de celui-ci et/ou à la phase d'utilisation de cette donnée dans ledit programme ou une partie de celui-ci.

5. Procédé selon l'une des revendications 1 à 4, **caractérisé en ce que** l'attribut est stocké dans lesdits moyens de mémorisation (7,11) avec la donnée correspondante de manière qu'un accès en mémoire à la donnée offre un accès à l'attribut correspondant s'il en existe.

6. Procédé de sécurisation d'un ensemble électronique comportant des moyens de traitement et des moyens de mémorisation (7,11) contenant un programme à exécuter, **caractérisé en ce qu'**il consiste lors de l'exécution dudit programme utilisant au moins une donnée, à vérifier qu'un (ou des) attribut(s) d'identification associé(s) à la dite donnée stockée dans les dits moyens de mémorisation et permettant de classer ladite donnée dans une famille de données correspond(ent) à la (aux) famille(s) attendue(s).

7. Procédé selon la revendication 6, **caractérisé en ce qu'**il consiste lors de l'exécution dudit programme utilisant au moins une donnée, à vérifier qu'un (ou des) attribut(s) d'identification associé(s) à la dite donnée stockée dans les dits moyens de mémorisation et permettant de classer ladite donnée dans une famille de données correspond(ent) à la (aux) famille(s) attendue(s) de manière à détecter une attaque lorsque tel n'est pas le cas.

8. Module électronique comportant des moyens de traitement et des moyens de mémorisation (7,11) contenant un programme à exécuter **caractérisé en ce que** les moyens de mémorisation (7) comprennent au moins un attribut d'identification d'une donnée stockée dans lesdits moyens (7) permettant de classer ladite donnée dans une famille de données et/ou **en ce qu'**il comprend des moyens permettant d'associer à au moins une donnée stockée dans lesdits moyens de mémorisation (11) au moins un attribut d'identification permettant de classer ladite donnée dans une famille de données.

9. Carte **caractérisée en ce qu'**elle comprend le module électronique selon la revendication 8.

10. Programme d'ordinateur comprenant des instructions de code de programme pour l'exécution des étapes du procédé selon l'une des revendications 1 à 7 lorsque ledit programme est exécuté dans un module électronique.
